# FASCICULE DE BREVET EUROPEEN

(11) **EP 0 820 193 B1**
(45) Date de publication et mention de la délivrance du brevet: **10.04.2002**
(21) Numéro de dépôt: 97202054.9
(22) Date de dépôt: 03.07.1997
(51) Int. Cl.: H04N 7/16

(54) **Procédé d'exploitation d'un appareil destiné à permettre l'accès à des services**
Betriebsverfahren für ein Dienstzugriffsgerät
Operating method for a service access apparatus

(30) Priorité: 17.07.1996 FR 9608954
(43) Date de publication de la demande: 21.01.1998
(73) Titulaire: Koninklijke Philips Electronics N.V., 5621 BA Eindhoven (NL)
(72) Inventeur: Le Berre, Jacques, 75008 Paris (FR)
(74) Mandataire: Charpail, François

(56) Documents cités:
- EP-A- 0 562 295
- EP-A- 0 656 728
- WO-A-95/20294

## Description

La présente invention concerne un appareil muni de moyens destinés à permettre l'accès à des services fournis sur abonnement par un premier fournisseur, et avec lequel l'accès à des services proposés par un deuxième fournisseur est possible.

Elle concerne également un procédé d'exploitation d'un appareil, destiné à permettre l'accès à des services fournis sur abonnement par un premier fournisseur déterminé, et selon lequel l'accès à des services proposés par un deuxième fournisseur est possible.

Afin de développer le marché des récepteurs-décodeurs permettant l'accès à des programmes de télévision payants, les fournisseurs de programmes désirent que le prix de ces appareils soit aussi bas que possible pour l'usager. Afin d'obtenir un prix artificiellement bas, certains proposent soit de subventionner l'achat des appareils, soit de les acheter eux mêmes pour les proposer en location. Dans un cas comme dans l'autre, ils désirent rentabiliser leur investissement en évitant qu'un appareil subventionné par un premier fournisseur puisse recevoir des programmes provenant d'un deuxième fournisseur, et certains récepteurs-décodeurs sont munis à cet effet de moyens pour vérifier si le fournisseur d'un programme dont un abonné désire la réception est le fournisseur auquel l'appareil est lié. D'un autre côté, les fabricants d'appareils préfèrent vendre des appareils polyvalents, et les utilisateurs désirent ne pas être obligés de s'équiper avec plusieurs appareils du même genre, ce qui est cher et encombrant : ainsi, un appareil basé sur l'emploi de plusieurs cartes à intelligence pour des programmes de télévision offerts par plusieurs fournisseurs est connu du document EP 0 562 295, selon lequel plusieurs lecteurs de carte sont connectés et contrôlés par un unique processeur.

Le même genre de problème est susceptible de se poser dans le cadre de la téléphonie mobile ("GSM").

Un objet de l'invention est de fournir une solution à la contradiction entre les désirs des fournisseurs et ceux des usagers.

A cet effet, l'appareil est muni de moyens pour refuser l'accès à des services offerts par un deuxième fournisseur, sauf si l'abonnement souscrit auprès du premier fournisseur a une certaine andenneté.

De cette manière un compromis est obtenu entre les exigences contradictoires exposées plus haut.

Selon une forme de réalisation, l'appareil est muni de moyens de contrôle pour autoriser ou non l'accès à des services offerts par un deuxième fournisseur, de moyens de calcul pour calculer la différence de date entre la date de la première utilisation de l'abonnement souscrit auprès du premier fournisseur et la date courante, et les moyens de contrôle sont agencés pour autoriser l'accès aux services du deuxième fournisseur si la dite différence de date est supérieure à une valeur déterminée.

Dans une forme préférée du procédé, l'appareil, muni de moyens pour recevoir des communications embrouillées, est muni en outre de moyens pour vérifier, d'une part, si le procédé d'embrouillage est le même pour les deux fournisseurs, d'autre part, si l'ancienneté de l'abonnement souscrit auprès du premier fournisseur est supérieure à une durée déterminée, et de moyens pour autoriser l'accès aux services du deuxième fournisseur si ces deux conditions sont satisfaites.

L'appareil est avantageusement muni de moyens pour enregistrer automatiquement la date de la première utilisation de l'abonnement lors de sa première mise en route, et de moyens pour délivrer un message d'avertissement lorsque l'ancienneté de l'abonnement n'est pas suffisante pour autoriser l'accès à certains services.

Ces aspects de l'invention ainsi que d'autres aspects plus détaillés apparaîtront plus clairement grâce à la description suivante d'un mode de réalisation constituant un exemple non limitatif.

La figure 1 représente schématiquement un appareil récepteur-décodeur de télévision.

La figure 2 est un diagramme illustrant l'enregistrement de la date de la première utilisation.

La figure 3 est un diagramme illustrant le fonctionnement des moyens de contrôle et de calcul. La description qui suit est basée sur l'exemple d'un appareil récepteur-décodeur de télévision, mais les éléments concernant l'autorisation d'accès sont susceptibles de s'appliquer également tels quels au contrôle d'accès de tout autre type d'appareil.

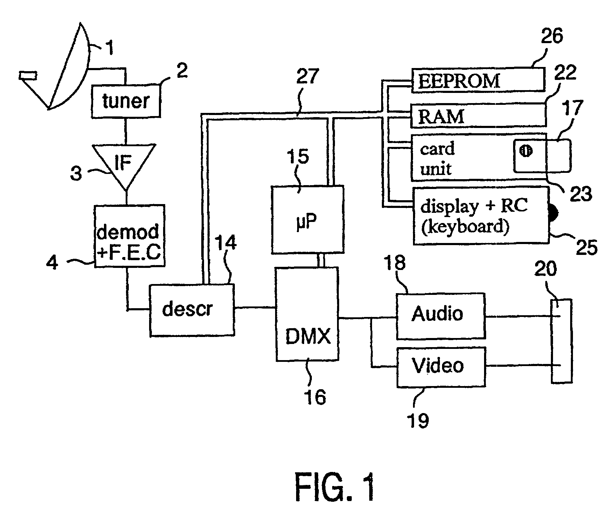

Le récepteur-décodeur représenté par la figure 1 est destiné à permettre l'accès par abonnement à au moins un bouquet de programmes de télévision, codés selon le standard MPEG-2. Il est clair que l'invention s'appliquerait également à des appareils prévus pour un autre standard.

L'appareil comprend un ensemble de réception satellite constitué d'une antenne parabolique 1 et d'un tuner 2, suivi d'un amplificateur à fréquence intermédiaire 3. Ensuite, le signal à fréquence intermédiaire est démodulé et certaines erreurs corrigées, dans un module 4. A ce niveau, le signal est désembrouillé dans un module de désembrouillage 14 relié, par un bus 27, à un lecteur 23 de carte à microprocesseur 17, dite carte à puce, et à un microprocesseur 15. Le microprocesseur 15 comprend une mémoire morte dans laquelle sont inscrites des instructions de base. Il est associé à une mémoire vive 22 pour des données instantanées, à une mémoire 26 de type EEPROM pour mémoriser des éléments de programmes semi-permanents, c'est-à-dire devant être conservés à l'extinction de l'appareil mais susceptibles d'être mis à jour, ainsi qu'à un lecteur de carte 23, à un clavier de commande et/ou un récepteur de télécommande 25 associé à un écran d'affichage de données. Le signal désembrouillé est soumis à l'action d'un démultiplexeur 16, relié au microprocesseur 15, qui sépare les uns des autres différents programmes. Le signal issu de ce démultiplexeur est sous une forme numérique et requiert d'être transformé en un signal analogique pour afficher une image sur un écran et appliquer le son à un haut-parleur. Cette transformation est effectuée dans un décodeur vidéo 19 et dans un décodeur de son 18. Ces décodeurs sont reliés à un connecteur 20 pour, par exemple, la connexion à un téléviseur classique.

Le lecteur 23 de carte à puce 17 sert, bien entendu, à lire dans une carte des informations nécessaires au désembrouillage d'émissions de télévision, d'une façon connue. La carte contient des informations telles qu'une dé de distribution, la référence d'un fournisseur, les caractéristiques d'un abonnement à un bouquet de programmes diffusé par un fournisseur, le type de l'embrouillage.

Le microprocesseur 15 est muni d'un élément logiciel pour enregistrer automatiquement la date de la première utilisation de l'abonnement lors de la première insertion d'une carte dans l'appareil.

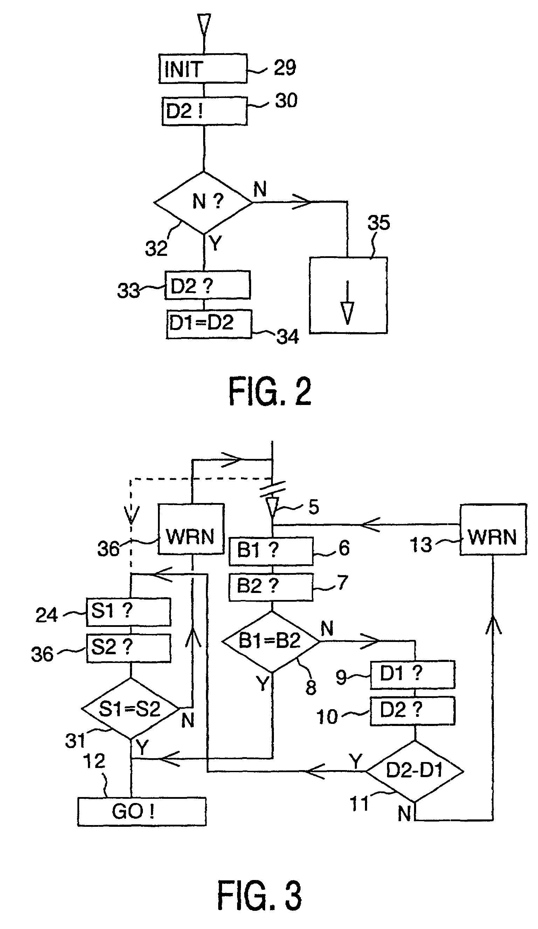

Un diagramme illustrant la partie pertinente de ce logiciel est montré par la figure 2. Lors de chaque mise en route de l'appareil, un programme est exécuté automatiquement. Ce programme configure le microprocesseur et positionne certaines variables, dans une phase 29 d'initialisation. En 30, la date du jour D2, qui est reçue par l'appareil sous forme codée à partir de n'importe quel émetteur, est placée dans la mémoire 22. En 32, il est vérifié si la mise en route de l'appareil est une première mise en route. Pour cela, plusieurs méthodes connues peuvent être utilisées. Par exemple, lors de la fabrication de l'appareil, un drapeau est positionné dans la mémoire EEPROM, pour indiquer que l'appareil n'a jamais servi : il suffit de tester ce drapeau. Une autre méthode consiste à vérifier si un champ mémoire D1, où se trouve normalement la date de début de l'abonnement auprès du fournisseur qui a subventionné l'appareil, est vierge, ce qui est le cas avant la première mise en route. S'il s'agit de la première mise en route (Y), le processus vient en 33 où la date D2 du jour est lue dans la mémoire 22, puis en 34, où cette date du jour D2 est écrite dans le champ D1 de la mémoire 26. S'il ne s'agit pas de la première mise en route (N), le processus vient en 35 pour effectuer d'autres opérations sans rapport avec l'invention.

Le microprocesseur 15 contient en outre un logiciel de contrôle pour autoriser ou non la réception d'un programme selon que le fournisseur du programme que l'abonné désire recevoir est, ou n'est pas, celui qui a subventionné l'appareil. Ce logiciel comprend des moyens pour évaluer l'ancienneté de l'abonnement, en calculant la différence entre la date de la première utilisation de l'abonnement de l'usager et la date courante, obtenue par réception d'un programme. Il autorise la réception du programme demandé si l'ancienneté de l'abonnement est supérieure à une durée déterminée, même dans le cas où le fournisseur n'est pas celui qui a subventionné l'appareil. L'ancienneté nécessaire peut être par exemple de six mois, ou toute autre valeur plus longue ou plus courte selon la politique du fournisseur, et selon la valeur de la subvention accordée initialement. Bien entendu, il faut en plus que le type d'embrouillage soit compatible entre les deux fournisseurs.

Un diagramme illustrant la partie pertinente de ce logiciel est montré par la figure 3. L'entrée du logiciel est référencée 5 (la coupure indiquée au dessus de l'entrée 5 sera expliquée plus loin). En 6, la référence B1 du fournisseur qui a subventionné l'appareil est lue, par exemple dans la mémoire morte. En 7, la référence B2 du fournisseur du programme que l'usager désire regarder est lue dans la carte 17 par le lecteur de carte 23, puisque à chaque fournisseur de programme correspond une carte, ou bien, dans le cas où plusieurs cartes seraient placées à l'avance dans un lecteur multicarte (non représenté), la référence serait lue dans la mémoire 22, l'information venant alors d'une commande de l'usager, par l'intermédiaire du clavier ou du récepteur de télécommande 25, commande dont le code est mémorisé dans la mémoire 22. En 8 est effectuée une comparaison entre les deux références B1 et B2. Si elles concordent (Y), il n'y a pas de problème et le processus vient en 12, pour autoriser le fonctionnement du récepteur-décodeur connu en soi. Si les deux fournisseurs B1 et B2 sont différents (N), le processus le processus vient en 9, où la date D1 de début de l'abonnement auprès du fournisseur qui a subventionné l'appareil est lue dans la mémoire 26. En 10, la date D2 du jour est lue dans la mémoire 22. En 11, la différence entre les dates D1 et D2 est calculée et comparée à une grandeur prédéterminée. Si cette différence est suffisante (Y), le processus vient en 24 où le type Si de l'embrouillage correspondant au premier fournisseur est déterminé, puis en 36 où le type S2 de l'embrouillage correspondant au deuxième fournisseur est déterminé ; en 31, la condition que ces deux types d'embrouillage sont les mêmes est vérifiée et, si c'est le cas le processus vient en 12. Si, en 11, l'abonnement est jugé trop récent (N), le processus délivre, dans l'opération 13, un message d'avertissement indiquant que l'ancienneté de l'abonnement n'est pas suffisante pour autoriser la réception du programme, puis revient au départ. Il est clair que les opérations 6, 7, 8 d'une part et les opérations 9, 10, 11 d'autre part peuvent être échangées sans modifier le résultat obtenu, autrement dit qu'il est indifférent de vérifier d'abord l'identité des deux fournisseurs et ensuite l'ancienneté de l'abonnement, ou l'inverse ; néanmoins dans beaucoup de cas l'usager n'utilise qu'une carte du premier fournisseur et il est préférable de commencer par le test 8 pour éviter des tests inutiles. En variante, il est également possible de prévoir une auto-programmation, à savoir, si le contrôle en 8 montre que l'abonnement est ancien, étant donné que cette information est définitive, le programme peut alors se modifier lui même de façon irréversible, en coupant l'accès à l'entrée 5 (coupure indiquée au dessus de l'entrée 5), de manière à arriver directement en 24 via la ligne indiquée en trait pointillé. L'homme du métier peut aisément compliquer ces logiciels en y introduisant des moyens pour vérifier un mot de passe, afin d'éviter qu'une personne non autorisée puisse falsifier le logiciel pour rendre la date D1 plus ancienne, ou pour éliminer le contrôle.

## Revendications

1. Appareil muni de moyens destinés à permettre l'accès à des services fournis sur abonnement par un premier fournisseur, et avec lequel l'accès à des services proposés par un deuxième fournisseur est possible, **caractérisé en ce qu'**il est muni de moyens (15, 22, 26) pour refuser l'accès à des services offerts par un deuxième fournisseur, sauf si l'abonnement souscrit auprès du premier fournisseur a une ancienneté supérieure à une durée déterminée.

2. Appareil selon la revendication 1, **caractérisé en ce qu'**il est muni de moyens de contrôle (15) pour autoriser ou non l'accès à des services offerts par un deuxième fournisseur, de moyens de calcul (15, 22, 26) pour calculer la différence de date entre la date (D1) de la première utilisation de l'abonnement souscrit auprès du premier fournisseur et la date courante (D2), et **en ce que** les moyens de contrôle (15, 22, 26) sont agencés pour autoriser l'accès aux services du deuxième fournisseur si la dite différence de date est supérieure à une valeur déterminée.

3. Appareil selon l'une des revendications 1 ou 2, muni de moyens pour recevoir des communications embrouillées, **caractérisé en ce qu'**il est muni de moyens (6, 7, 8) pour vérifier, d'une part, si le procédé d'embrouillage est le même pour les deux fournisseurs, d'autre part, si l'ancienneté de l'abonnement souscrit auprès du premier fournisseur est supérieure à une durée déterminée, et de moyens (9, 10, 11) pour autoriser l'accès aux services du deuxième fournisseur si ces deux conditions sont satisfaites.

4. Appareil selon l'une des revendications 1 ou 2, **caractérisé en ce qu'**il est muni de moyens (15) pour enregistrer automatiquement la date de la première utilisation de l'abonnement lors de la première mise en route de l'appareil.

5. Appareil selon l'une quelconque des revendications 1 à 4, **caractérisé en ce qu'**il est muni de moyens (25) pour délivrer un message d'avertissement lorsque l'ancienneté de l'abonnement n'est pas suffisante pour autoriser l'accès à certains services.

6. Procédé d'exploitation d'un appareil destiné à permettre l'accès à des services fournis sur abonnement par un premier fournisseur déterminé et selon lequel l'accès à des services proposés par un deuxième fournisseur est possible
**caractérisé en ce qu'**il comprend :
- une étape de calcul (9, 10, 11) pour calculer la différence de date entre la date (D1) de première utilisation de l'abonnement souscrit auprès du premier fournisseur et la date courante (D2) et
- une étape de contrôle (13) pour autoriser l'accès à des services offerts par un deuxième fournisseur si la différence de date est supérieure à une valeur déterminée.

7. Procédé selon la revendication 6, faisant appel à un embrouillage de communications, **caractérisé en ce que** l'appareil vérifie deux conditions, d'une part, si le procédé d'embrouillage est le même pour les deux fournisseurs (6, 7, 8), d'autre part, si l'ancienneté de l'abonnement souscrit auprès du premier fournisseur est supérieure à une durée déterminée (9, 10, 11) et autorise l'accès aux services du deuxième fournisseur si ces deux conditions sont satisfaites (13).

8. Procédé selon l'une des revendications 6 ou 7, **caractérisé en ce que** la date de la première utilisation de l'abonnement est enregistrée automatiquement par l'appareil lors de sa première mise en route.

## Claims

1. An apparatus provided with means intended to permit access to services provided on subscription by a first provider, which apparatus enables access to services offered by a second provider, **characterized in that** the apparatus is provided with means (15, 22, 26) for refusing access to services offered by a second provider, except when the subscription taken out by the first provider has a length of service which exceeds a given period of time.

2. An apparatus as claimed in claim 1, **characterized in that** the apparatus is provided with control means (15) for authorizing or not authorizing access to services offered by a second provider, means (15, 22, 26) for computing the difference between the date (D1) of first use of the subscription taken out by the first provider and the current date (D2), and **in that** the control means (15, 22, 26) are arranged to authorize access to the services offered by the second provider if said difference between the dates exceeds a given value.

3. An apparatus as claimed in claim 1 or 2, provided with means for receiving scrambled communications, **characterized in that** the apparatus is provided with means (6, 7, 8) for verifying, on the one hand, if the scrambling method is the same for the two providers and, on the other hand, if the period of the subscription taken out by the first provider exceeds a given period of time, and means (9, 10, 11) for authorizing access to the services offered by the second provider if these two conditions are satisfied.

4. An apparatus as claimed in claim 1 or 2, **characterized in that** the apparatus is provided with means (15) for automatically registering the date of first use of the subscription when the apparatus is put into use for the first time.

5. An apparatus as claimed in any one of claims 1 to 4, **characterized in that** the apparatus is provided with means (25) for delivering a warning message when the subscription period is not sufficient to authorize access to certain services.

6. A method of operating an apparatus intended to permit access to services provided on subscription by a first provider, which method enables access to services offered by a second provider, **characterized in that** the method comprises the steps of: computing (9, 10, 11) the difference between the date (D1) of first use of the subscription taken out by the first provider and the current date (D2), and controlling (13) to authorize access to services offered by a second provider if said difference between the dates exceeds a given value.

7. A method as claimed in claim 6, making use of scrambled communications, **characterized in that** the apparatus verifies two conditions, namely, on the one hand, if the scrambling method is the same for the two providers (6, 7, 8) and, on the other hand, if the period of the subscription taken out by the first provider exceeds a given period of time (9, 10, 11), and authorizes access to the services offered by the second provider if these two conditions are satisfied (13).

8. A method as claimed in claim 6 or 7, **characterized in that** the date of first use of the subscription is automatically registered by the apparatus when it is put into use for the first time.

## Patentansprüche

1. Gerät, das mit Verfahren versehen ist, um den Zugriff auf die von einem ersten Anbieter per Abonnement bereitgestellten Dienstleistungen zu ermöglichen, und mit dem der Zugriff auf die von einem zweiten Anbieter bereitgestellten Dienstleistungen ermöglicht wird, **dadurch gekennzeichnet, daß** es Verfahren (15, 22, 26) enthält, um den Zugriff auf die Dienstleistungen eines zweiten Anbieter zu verweigern, außer wenn das Abonnement beim ersten Anbieter bereits seit einer gewissen Zeit eingegangen wurde.

2. Gerät nach Anspruch 1, **dadurch gekennzeichnet, daß** es mit Kontrollverfahren (15) versehen ist, um den Zugriff auf die Dienstleistungen eines zweiten Anbieters zu gewähren oder nicht, mit Rechenverfahren (15, 22, 26), um die Differenz zwischen dem Datum (D1) der Erstverwendung des Abonnements, das bei einem ersten Anbieter eingegangen wurde, und dem laufenden Datum (D2) zu berechnen, und daß die Kontrollverfahren (15, 22, 26) geschaltet sind, um den Zugriff auf die Dienstleistungen eines zweiten Anbieters zu gewähren, wenn die besagte Datumsdifferenz über einem bestimmten Wert liegt.

3. Gerät nach einem der Ansprüche 1 oder 2, mit Verfahren versehen, um verschlüsselte Sendungen zu empfangen, **dadurch gekennzeichnet, daß** es mit Verfahren (6, 7, 8) versehen ist, um einerseits zu prüfen, ob das Verschlüsselungsverfahren beider Anbieter dasselbe ist, und andererseits, ob die Zeitdauer des beim ersten Anbieter eingegangenen Abonnements über einer bestimmten Zeit liegt, und mit Verfahren (9, 10, 11), um den Zugriff auf die Dienstleistungen eines zweiten Anbieters zu gewähren, wenn diese beiden Bedingungen erfüllt sind.

4. Gerät nach einem der Ansprüche 1 oder 2, **dadurch gekennzeichnet, daß** es mit Verfahren (15) versehen ist, um das erste Verwendungsdatum des Abonnements automatisch zu registrieren, wenn das Gerät zum erstenmal benutzt wird.

5. Gerät nach einem der beliebigen Ansprüche 1 bis 4, **dadurch gekennzeichnet, daß** es mit Verfahren (25) versehen ist, um eine Warnmeldung abzugeben, wenn die Zeitdauer des Abonnements nicht ausreicht, um den Zugriff zu bestimmten Dienstleistungen zu gewähren.

6. Betriebsverfahren eines Geräts, das für den Zugriff auf von einem bestimmten ersten Anbieter per Abonnement bereitgestellte Dienstleistungen bestimmt ist, und mit dem der Zugriff auf die von einem zweiten Anbieter bereitgestellten Dienstleistungen ermöglicht wird, **dadurch gekennzeichnet, daß** es umfaßt:
- einen Rechenschritt (9, 10, 11), um die Differenz zwischen dem Datum (D1) der Erstverwendung des Abonnements, das bei einem ersten Anbieter eingegangen wurde, und dem laufenden Datum (D2) zu berechnen, und
- einen Kontrollschritt (13), um den Zugriff auf die Dienstleistungen eines zweiten Anbieters zu gewähren, wenn die besagte Datumsdifferenz über einem bestimmten Wert liegt.

7. Verfahren nach Anspruch 6, das auf einen Übertragungsschlüssel zurückgreift, **dadurch gekennzeichnet, daß** das Gerät zwei Bedingungen überprüft, d.h. einerseits, ob das Verschlüsselungsverfahren beider Anbieter (6, 7, 8) dasselbe ist, und andererseits, ob die Zeitdauer des beim ersten Anbieter eingegangenen Abonnements über einer bestimmten Zeit (9, 10, 11) liegt, um den Zugriff auf die Dienstleistungen eines zweiten Anbieters zu gewähren, wenn diese beiden Bedingungen erfüllt sind (13).

8. Verfahren nach einem der Ansprüche 6 oder 7, **dadurch gekennzeichnet, daß** das erste Verwendungsdatum des Abonnements automatisch registriert wird, wenn man das Gerät zum erstenmal benutzt.
